# FASCICULE DE BREVET EUROPEEN

(11) **EP 3 946 838 B1**
(45) Date de publication et mention de la délivrance du brevet: **17.12.2025**
(21) Numéro de dépôt: 20731164.8
(22) Date de dépôt: 20.03.2020
(51) Int. Cl.: B25J 9/16, B08B 9/08, B25J 11/00, B25J 19/02, B64G 1/40, F02K 9/08, F02K 9/24

(54) **DISPOSITIF ET PROCEDE DE FINITION D'UN CHARGEMENT DE PROPERGOL**
VORRICHTUNG UND VERFAHREN ZUR BEENDIGUNG EINER FESTTREIBSTOFFLADUNG
DEVICE AND METHOD FOR FINISHING A SOLID-PROPELLANT CHARGE

(30) Priorité: 28.03.2019 FR 1903268
(43) Date de publication de la demande: 09.02.2022
(73) Titulaire: ArianeGroup SAS, 78130 Les Mureaux (FR)
(72) Inventeur: BITONNEAU, David, 33185 Le Haillan (FR); MOULIERES-SEBAN, Théo, 33185 Le Haillan (FR); KAMATCHY, Simon, 33185 Le Haillan (FR)
(74) Mandataire: Cabinet Beau de Loménie
(86) Numéro de dépôt international: PCT/FR2020/050612
(87) Numéro de publication internationale: WO 2020/193926

(56) Documents cités:
- US-A- 3 183 592
- US-A- 3 326 086
- US-A- 4 218 941
- US-A- 4 462 286
- US-A- 5 391 025
- US-A1- 2011 270 444
- US-A1- 2014 277 720
- US-A1- 2016 214 143
- US-A1- 2018 154 518

## Description

### Domaine Technique

La présente invention se rapporte au domaine général de la fabrication d'un chargement de propergol.

### Technique antérieure

Actuellement, un chargement de propergol est obtenu en coulant une pâte de propergol dans une structure à l'intérieur de laquelle un noyau a été installé afin de donner la forme souhaitée au chargement de propergol.

Une fois le propergol solidifié, le noyau est retiré.

Un défaut qui est souvent rencontré lors de la fabrication d'un chargement de propergol est l'apparition de voiles, qui sont des surplus de propergol qui se sont formées à cause de jeu entre les différents éléments du noyau, et qui peuvent se déposer sur la paroi interne du canal central du chargement de propergol lors du retrait du noyau.

Ces voiles de propergol doivent être retirés du chargement de propergol afin d'assurer que ledit chargement possède bien les caractéristiques souhaitées. Actuellement, cette étape de retrait est effectuée par des opérateurs qui viennent gratter manuellement avec des outils la paroi interne du canal central du chargement de propergol afin d'en décoller les voiles.

Or, une telle étape de retrait rencontre des problèmes de sécurité, exposant notamment les opérateurs à un risque pyrotechnique.

US3183592 divulgue un outil manuel de retrait de voiles de propergol sur la paroi interne du canal central d'un chargement de propergol.

US5391025 divulgue l'utilisation en mode automatique d'un bras robot à l'intérieur d'un canal central d'un chargement de propergol, afin de creuser des tunnels latéraux.

US2018154518 divulgue un bras robot utilisé en mode de télé-opération afin de réaliser des opérations d'usinage sur des pièces.

### Exposé de l'invention

La présente invention a donc pour but principal de fournir une solution permettant d'assurer un retrait des voiles d'un chargement de propergol en toute sécurité.

Selon un premier aspect, l'invention concerne un procédé de retrait de voiles formés sur une paroi d'un canal central d'un chargement de propergol, caractérisé en ce que le procédé comprend une étape de retrait de voiles par arasage de la paroi du canal central du chargement de propergol avec un outil d'arasage installé sur un bras robot articulé durant laquelle :
- les mouvements du bras robot sont commandés par une interface utilisateur qui comprend des moyens de commande configurés pour être utilisés par un utilisateur ;
- un capteur d'effort mesure la force appliquée par l'outil d'arasage ;
- une unité de contrôle reliée au capteur d'effort régule les mouvements du bras robot en maintenant la force appliquée par l'outil d'arasage central inférieure à un premier seuil d'effort prédéterminé, l'unité de contrôle régulant également les mouvements du bras robot en maintenant une vitesse de déplacement de l'outil d'arasage qui est inférieure à une valeur seuil de vitesse prédéterminée.

Un tel procédé offre l'avantage d'offrir un bon contrôle de l'outil d'arasage par un utilisateur, et permet de limiter les risques d'endommagement du chargement de propergol.

Selon une caractéristique possible, le procédé comprend une étape de palpage réalisée avant l'étape de retrait des voiles et durant laquelle :
- l'outil d'arasage est déplacé le long de la paroi du canal central du chargement de propergol par le bras robot ;
- les mouvements du bras robot sont commandés par l'interface utilisateur ;
- le capteur d'effort mesure la force appliquée par l'outil d'arasage ;
- l'unité de contrôle régule les mouvements du bras robot en maintenant la force appliquée par l'outil d'arasage inférieure à un deuxième seuil d'effort prédéterminé qui est inférieur au premier seuil d'effort.

Selon une caractéristique possible, le premier seuil d'effort varie entre une valeur minimale et une valeur maximale qui sont prédéterminées.

Selon une caractéristique possible, la valeur seuil de vitesse varie entre une valeur minimale et une valeur maximale qui sont prédéterminées.

Selon une caractéristique possible, l'étape de retrait de voiles comprend les sous-étapes suivantes :
- placer l'outil d'arasage contre un voile ;
- appuyer l'outil d'arasage contre le voile en augmentant progressivement la forcée appliquée par l'outil d'arasage contre le voile et en augmentant progressivement le premier seuil d'effort jusqu'au décollement du voile.

Selon une caractéristique possible, l'unité de contrôle régule les mouvements du bras robot en maintenant l'énergie cinétique du bras robot inférieure à une valeur seuil d'énergie cinétique prédéterminée.

Selon un deuxième aspect, l'invention concerne un dispositif de retrait de voiles formés sur une paroi d'un canal central d'un chargement de propergol comprenant :
- un bras robot articulé comprenant une extrémité configurée pour pénétrer à l'intérieur du canal central du chargement de propergol ;
- un outil d'arasage qui est configuré pour être fixé à l'extrémité du bras robot ;
- un capteur d'effort qui est configuré pour être fixé à l'extrémité du bras robot et qui est configuré pour mesurer la force appliquée par le bras robot ;
- une interface utilisateur comprenant des moyens de commande qui sont configurés pour permettre le contrôle des mouvements du bras robot par un utilisateur ;
- une unité de contrôle qui est reliée au bras robot et au capteur d'effort, ladite unité de contrôle étant configurée pour réguler les mouvements du bras robot en maintenant la force appliquée par le bras robot inférieure à un premier seuil d'effort prédéterminé, ladite unité de contrôle étant en outre configurée pour réguler les mouvements du bras robot en maintenant une vitesse de déplacement de l'extrémité du bras robot qui est inférieure à une valeur seuil de vitesse prédéterminée.

Selon une caractéristique possible, l'outil d'arasage est en un matériau conducteur électriquement et est relié à la terre électrique.

Selon une caractéristique possible, le dispositif comprend au moins un capteur d'images qui est configuré pour être fixé à l'extrémité du bras robot, et l'interface utilisateur comprend un écran qui est configuré pour afficher des images acquises par ledit au moins un capteur d'images.

Selon une caractéristique possible, le dispositif comprend système d'éclairage qui est configuré pour être fixé à l'extrémité du bras robot.

Selon une caractéristique possible, le dispositif comprend une buse d'aspiration qui est configurée pour être fixée à l'extrémité du bras robot.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 illustre schématiquement un dispositif de retrait de voiles formés sur une paroi d'un canal central d'un chargement de propergol.
[Fig. 2] La figure 2 illustre schématiquement l'extrémité du bras robot sur laquelle un outil d'arasage est installé qui est située dans le canal central du chargement de propergol.
[Fig. 3] La figure 3 illustre schématiquement les étapes d'un procédé de retrait des voiles formés sur une paroi d'un canal central d'un chargement de propergol.

### Description des modes de réalisation

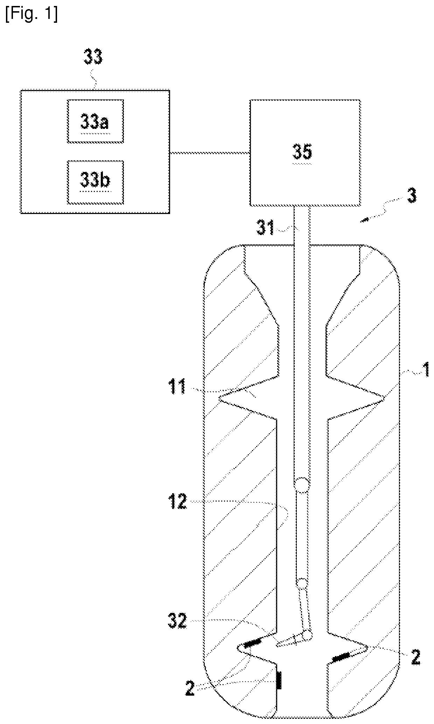

Comme illustré sur la figure 1, un chargement de propergol 1 comprend un canal central 11.

Des voiles 2 peuvent être situés sur la paroi 12 du canal central 11 du chargement de propergol 1. Les voiles 2 peuvent être formés par des surépaisseurs de propergol ou des copeaux de propergol qui se sont déposés sur la paroi 12 du canal central 11.

Un dispositif 3 de retrait des voiles 2 comprend un bras robot 31 articulé qui comprend une extrémité 31a sur laquelle un outil d'arasage 32 est fixé afin d'araser la paroi 12 du canal central 11 et ainsi retirer les voiles 2. L'arasage de la paroi 12 du canal central 11 permet de mettre à niveau ladite paroi 12, supprimant ainsi les surépaisseurs de propergol et décollant les copeaux de propergol collés à la paroi 12.

Comme visible sur la figure 1, le bras robot 31 est configuré pour introduire l'extrémité 31a, et ainsi l'outil d'arasage 32, à l'intérieur du canal central 11. Ainsi, le bras robot 31 peut comprendre une pluralité de liaisons pivot et comprendre une ou plusieurs portions télescopiques.

Les mouvements du bras robot 31 sont contrôlés par des moyens de commande 33a d'une interface utilisateur 33, permettant ainsi à un opérateur de contrôler les mouvements du bras robot 31 via l'interface utilisateur 33.

Selon un exemple non limitatif, les moyens de commande 33a sont formés par une manette, ou bien par une souris 3D (3 dimensions).

L'utilisation du bras robot 31 permet de ne pas exposer l'opérateur au risque pyrotechnique dû à la manipulation du chargement de propergol 1.

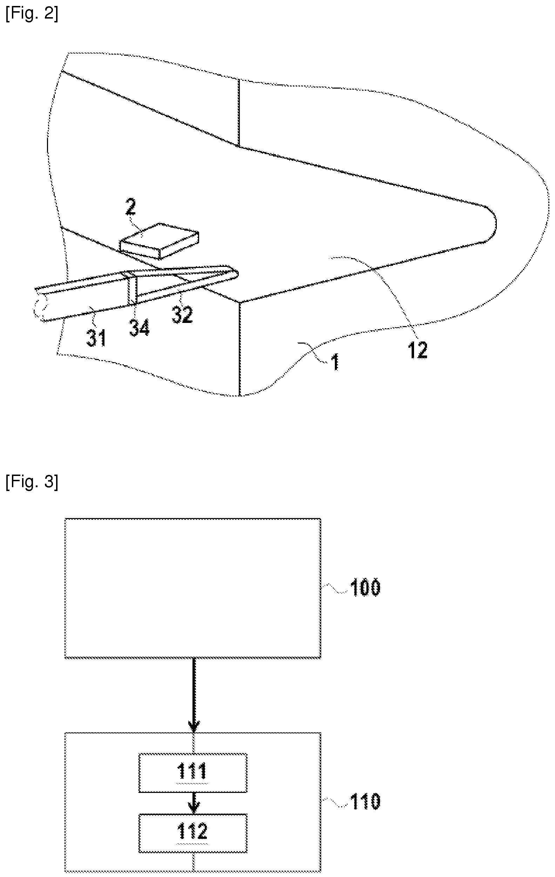

En outre, comme cela est visible sur la figure 2, un capteur d'effort 34 est installé sur l'extrémité 31a du bras robot 31 afin de mesurer la force appliquée par l'outil d'arasage 32 contre le chargement de propergol 1. Le capteur d'effort 34 permet ainsi de mesurer la force appliquée par l'outil d'arasage 32 contre la paroi 12 ou contre le voile 2.

Comme cela est visible sur la figure 2, l'outil d'arasage 32 peut être formé par une lame, par exemple une lame en forme de V. La lame peut par exemple être glissée sous les voiles 2 afin de décoller lesdits voiles 2 de la paroi 12 du canal central 11.

Selon une variante avantageuse, l'outil d'arasage 32 est en un matériau conducteur électriquement, comme par exemple en métal, et est reliée à la terre électrique, permettant ainsi de limiter le risque de mise à feu du chargement de propergol 1 par l'électricité statique.

Le dispositif 3 comprend également une unité de contrôle 35 qui régule les mouvements du bras robot 31 commandés par les moyens de commande 33a de l'interface utilisateur 33.

L'unité de contrôle 35 est reliée au capteur d'effort 34, et régule les mouvements de l'outil d'arasage 32 en régulant la force appliquée par l'outil d'arasage 32 sur le chargement de propergol 1.

En outre, l'unité de contrôle 35 régule les mouvements du bras robot 31 en régulant la vitesse de déplacement de l'outil d'arasage 32.

La vitesse de déplacement de l'outil d'arasage 32 peut être calculée par l'unité de contrôle 35 à partir des mouvements des différents servomoteurs du bras robot 31. La vitesse de déplacement de l'outil d'arasage 32 peut également être obtenue par un capteur d'accélération qui est fixé à l'extrémité 31a du bras robot 31, ledit capteur d'accélération étant relié à l'unité de contrôle 35.

Au moins un capteur d'images 36 peut également être installé sur l'extrémité 31a du bras robot 31 de manière à acquérir des images de la surface 12 du canal central 11 et de l'outil d'arasage 32.

L'interface utilisateur 33 peut comprendre un écran 33b qui est relié audit au moins un capteur d'images 36, permettant ainsi d'afficher les images acquises par ledit au moins un capteur d'images 36 pour l'opérateur.

En association avec le au moins un capteur d'images 36, le dispositif 3 peut comprendre un système d'éclairage qui est configuré pour être fixé à l'extrémité 31a du bras robot 31 et qui permet d'éclairer l'intérieur du canal central 11. Selon une caractéristique avantageuse, le système d'éclairage comprend plusieurs sources lumineuses, permettant ainsi de faire disparaître ou de faire apparaître des ombres sur la surface 12 du canal central 11 afin de mieux apprécier la forme du voile 2 éclairé par le système d'éclairage. Les sources lumineuses peuvent par exemple être formées par des lampes.

En outre, l'écran 33b peut également être utilisé pour afficher la force appliquée par l'outil d'arasage 32, ainsi que la vitesse de déplacement dudit outil d'arasage 32.

Le dispositif 3 peut également comprendre une buse d'aspiration qui est configurée pour être fixée à l'extrémité 31a du bras robot 31, de manière à aspirer les fragments de propergol détachés lors du retrait des voiles 2, permettant ainsi de laisser propre la surface 12 du canal central 11 à la fin du retrait des voiles 2. Le dispositif 3 peut comprendre un tuyau d'évacuation qui est relié à un réservoir afin d'évacuer les fragments de propergol aspirés par la buse d'aspiration. Selon une variante possible, la buse d'aspiration est intégrée à l'outil d'arasage 32.

L'unité de contrôle 35 est configurée pour mettre en œuvre un procédé de retrait des voiles 2 formés sur la paroi 12 du canal central 11 du chargement de propergol 1.

Comme illustré sur la figure 3, le procédé comprend une étape 110 de retrait des voiles 2 par arasage de la paroi 12 du canal central 11 avec l'outil d'arasage 32 qui est installé sur le bras robot 31. L'arasage de la paroi 12 est réalisé en mettant à niveau la paroi 12 par retrait des voiles 2, la mise à niveau de la paroi 12 étant réalisée avec l'outil d'arasage 32 en décollant les voiles 2, ou bien en cassant les voiles 2 avec l'outil d'arasage 32 si les voiles 2 sont rigides.

Dans cette étape 110 de retrait des voiles 2 par arasage de la paroi 12, les mouvements du bras robot 31 sont commandées par l'interface utilisateur 33, l'utilisateur choisissant les mouvements réalisés par l'outil d'arasage 32 via les moyens de commande 33a de l'interface utilisateur 33. Les mouvements de l'outil d'arasage 32 peuvent notamment comprendre le déplacement de l'outil d'arasage 32 le long de la paroi 12, l'appui de l'outil d'arasage 32 contre les voiles 2, ou encore une rotation de l'outil d'arasage 32 pour décoller ou casser les voiles 2.

En outre, dans cette étape 110 de retrait des voiles 2 par arasage de la paroi 12, l'unité de contrôle 35 régule les mouvements du bras robot 31 en maintenant la force appliquée par l'outil d'arasage 32 inférieure à un premier seuil d'effort prédéterminé, la force appliquée étant mesurée par le capteur d'effort 34 durant l'étape 110.

Le fait de limiter la force appliquée par l'outil d'arasage 32 en dessous du premier seuil d'effort permet de retirer les voiles, tout en limitant le risque d'endommagement du chargement de propergol 1. Le premier seuil d'effort peut par exemple être compris entre 30 et 100N. La force tangentielle à la surface appliquée sur le voile 2 par l'outil d'arasage 32 peut par exemple être compris entre 30 et 100N.

De plus, durant l'étape 110 de retrait des voiles 2 par arasage de la paroi 12, l'unité de contrôle 35 régule également les mouvements du bras robot 31 en maintenant la vitesse de déplacement de l'outil d'arasage 32 inférieure à une valeur de vitesse prédéterminée.

Le fait de limiter la vitesse de déplacement de l'outil d'arasage 32 en dessous de la valeur de vitesse prédéterminée durant l'étape 110 d'arasage de la paroi 12 permet de limiter le risque de mise à feu du chargement de propergol 1. La valeur seuil de vitesse peut par exemple être comprise entre 0,38 cm/s et 0,5 cm/s.

Le premier seuil d'effort peut être variable durant l'étape 110 de retrait des voiles 2, ledit premier seuil d'effort variant entre une valeur minimale et une valeur maximale qui sont prédéterminées. Ainsi, l'utilisateur peut augmenter la force appliquée par l'outil d'arasage 2 pour faire céder le voile contre lequel l'outil d'arasage 2 appuie, la force ne pouvant pas dépasser la valeur maximale afin de ne pas endommager le chargement de propergol 1.

La valeur seuil de vitesse peut être variable durant l'étape 110 de retrait des voiles 2, la valeur seuil de vitesse variant entre une valeur minimale et une valeur maximale. Une telle variation de la valeur seuil de vitesse permet d'une part de limiter les risques lors d'opérations délicates réalisées par l'outil d'arasage, et d'autre part permet d'accélérer l'outil d'arasage 32 lorsque ledit outil d'arasage 32 n'est pas en contact du chargement de propergol 1.

Par ailleurs, comme cela est illustré sur la figure 3, l'étape 110 de retrait des voiles 2 peut comprendre les sous-étapes suivantes :
- sous-étape 111 : placer l'outil d'arasage 32 contre un voile 2 ;
- sous-étape 112 : appuyer l'outil d'arasage 32 contre le voile 2 en augmentant progressivement la force appliquée par l'outil d'arasage contre le voile 2 et en augmentant progressivement le premier seuil d'effort jusqu'au décollement du voile 2.

Comme cela est illustré sur la figure 3, le procédé peut comprendre une étape 100 de palpage de la paroi 12 qui permet de détecter les voiles 2 et qui est réalisée avant l'étape 110 de retrait des voiles 2.

Durant l'étape 100 de palpage, l'outil d'arasage 32 est déplacé le long de la paroi 12 du canal central 11 du chargement de propergol 1 afin de détecter la présence d'un voile 2 lorsque l'outil d'arasage 32 bute contre une voile 2, les mouvements de l'outil d'arasage 32 par le bras robot 31 sont commandés par l'interface utilisateur 33.

Durant l'étape 100 de palpage, l'unité de contrôle 35 régule les mouvements du bras robot 31 en maintenant la force appliquée par l'outil d'arasage 32 inférieure à un deuxième seuil d'effort prédéterminé qui est inférieur au premier seuil d'effort, le capteur d'effort 34 mesurant la force appliquée par l'outil d'arasage 32 durant l'étape 100.

Le fait de limiter la force appliquée par l'outil d'arasage 32 en dessous du deuxième seuil d'effort qui est inférieur au premier seuil d'effort permet de détecter la présence et la position d'un voile 2 lorsque l'outil d'arasage 32 bute contre un voile 2 et ne peux plus avancer, la force appliquée par l'outil d'arasage 32 contre le voile 2 étant trop faible pour retirer ledit voile 2. Le deuxième seuil d'effort peut par exemple être compris entre 0,5N et 5N, le deuxième seuil d'effort pouvant par exemple être égal à 1N.

Une fois un voile 2 détecté lors de l'étape 100, l'étape 110 de retrait du voile 2 par arasage est mise en œuvre, notamment en augmentant la force appliquée par l'outil d'arasage 32.

L'étape 100 de palpage permet un pré-positionnement de l'outil d'arasage 32 contre le voile 2 avant la mise en œuvre de l'étape 110 de retrait dudit voile 2.

La vitesse de déplacement de l'outil d'arasage 32 durant l'étape 100 de palpage peut être supérieure à la valeur seuil de vitesse établie pour l'étape 110 de retrait des voiles 2.

Selon une variante possible permettant de limiter le risque de mise à feu du chargement de propergol 1, durant le procédé de retrait des voiles 2, l'unité de contrôle 35 régule les mouvements du bras robot en maintenant l'énergie cinétique du bras robot inférieure à une valeur seuil d'énergie cinétique prédéterminée. Pour ce faire, lors de chaque déplacement réalisé par le bras robot 31, l'unité de contrôle 35 prend en compte la masse de la partie du bras robot 31 qui est mise en mouvement afin d'adapter la vitesse de la partie du bras robot 31 qui est mise en mouvement. Ainsi, un mouvement du bras robot 31 dans lequel une partie importante du bras robot 31 est mise en mouvement est réalisé à faible vitesse, limitant ainsi l'énergie cinétique du bras robot 31, tandis qu'une mise en mouvement uniquement de l'outil d'arasage 32 peut être réalisée à une vitesse plus importante.

## Revendications

1. Procédé de retrait de voiles (2) formés sur une paroi (12) d'un canal central (11) d'un chargement de propergol (1), **caractérisé en ce que** le procédé comprend une étape (110) de retrait de voiles (2) par arasage de la paroi (12) du canal central (11) du chargement de propergol (1) avec un outil d'arasage (32) installé sur un bras robot (31) articulé durant laquelle :
- les mouvements du bras robot (31) sont commandés par une interface utilisateur (33) qui comprend des moyens de commande (33a) configurés pour être utilisés par un utilisateur ;
- un capteur d'effort (34) mesure la force appliquée par l'outil d'arasage (32) ;
- une unité de contrôle (35) reliée au capteur d'effort (34) régule les mouvements du bras robot (31) en maintenant la force appliquée par l'outil d'arasage (32) inférieure à un premier seuil d'effort prédéterminé, l'unité de contrôle (35) régulant également les mouvements du bras robot (31) en maintenant une vitesse de déplacement de l'outil d'arasage (32) qui est inférieure à une valeur seuil de vitesse prédéterminée.

2. Procédé selon la revendication 1, dans lequel le procédé comprend une étape (100) de palpage réalisée avant l'étape (110) de retrait des voiles (2) et durant laquelle :
- l'outil d'arasage (32) est déplacé le long de la paroi (12) du canal central (11) du chargement de propergol (1) par le bras robot (31) ;
- les mouvements du bras robot (31) sont commandés par l'interface utilisateur (33) ;
- le capteur d'effort (34) mesure la force appliquée par l'outil d'arasage (32) ;
- l'unité de contrôle (35) régule les mouvements du bras robot (31) en maintenant la force appliquée par l'outil d'arasage (32) inférieure à un deuxième seuil d'effort prédéterminé qui est inférieur au premier seuil d'effort.

3. Procédé selon l'une quelconque des revendications 1 à 2, dans lequel le premier seuil d'effort varie entre une valeur minimale et une valeur maximale qui sont prédéterminées.

4. Procédé selon l'une quelconque des revendications 1 à 3, dans lequel la valeur seuil de vitesse varie entre une valeur minimale et une valeur maximale qui sont prédéterminées.

5. Procédé selon la revendication 3, dans lequel l'étape (110) de retrait de voiles (2) comprend les sous-étapes suivantes :
- (111) : placer l'outil d'arasage (32) contre un voile (2) ;
- (112) : appuyer l'outil d'arasage (32) contre le voile (2) en augmentant progressivement la forcée appliquée par l'outil d'arasage (32) contre le voile (2) et en augmentant progressivement le premier seuil d'effort jusqu'au décollement du voile (2).

6. Procédé selon l'une quelconque des revendications 1 à 5, dans lequel l'unité de contrôle (35) régule les mouvements du bras robot (31) en maintenant l'énergie cinétique du bras robot (31) inférieure à une valeur seuil d'énergie cinétique prédéterminée.

7. Dispositif (3) de retrait de voiles (2) formés sur une paroi (12) d'un canal central (11) d'un chargement de propergol (1) comprenant :
- un bras robot (31) articulé comprenant une extrémité (31a) configurée pour pénétrer à l'intérieur du canal central (11) du chargement de propergol (1) ;
- un outil d'arasage (32) qui est configuré pour être fixé à l'extrémité (31a) du bras robot (31) ;
- un capteur d'effort (34) qui est configuré pour être fixé à l'extrémité du bras robot (31) et qui est configuré pour mesurer la force appliquée par le bras robot (31) ;
- une interface utilisateur (33) comprenant des moyens de commande (33a) qui sont configurés pour permettre le contrôle des mouvements du bras robot (31) par un utilisateur ;
- une unité de contrôle (35) qui est reliée au bras robot (31) et au capteur d'effort (34), ladite unité de contrôle (35) étant configurée pour réguler les mouvements du bras robot (31) en maintenant la force appliquée par le bras robot (31) inférieure à un premier seuil d'effort prédéterminé, ladite unité de contrôle (35) étant en outre configurée pour réguler les mouvements du bras robot (31) en maintenant une vitesse de déplacement de l'extrémité (31a) du bras robot (31) qui est inférieure à une valeur seuil de vitesse prédéterminée.

8. Dispositif (3) selon la revendication 7, dans lequel l'outil d'arasage (32) est en un matériau conducteur électriquement et est relié à la terre électrique.

9. Dispositif (3) selon l'une quelconque des revendications 7 ou 8, dans lequel le dispositif (3) comprend au moins un capteur d'images qui est configuré pour être fixé à l'extrémité (31a) du bras robot (31), et l'interface utilisateur (33) comprend un écran (33b) qui est configuré pour afficher des images acquises par ledit au moins un capteur d'images.

10. Dispositif (3) selon la revendication 9, dans lequel le dispositif (3) comprend système d'éclairage qui est configuré pour être fixé à l'extrémité (31a) du bras robot (31).

11. Dispositif (3) selon l'une quelconque des revendications 7 à 10, dans lequel le dispositif (3) comprend une buse d'aspiration qui est configurée pour être fixée à l'extrémité (31a) du bras robot (31).

## Patentansprüche

1. Verfahren zum Entfernen von Graten (2), die auf einer Wand (12) eines Zentralkanals (11) einer Treibstoff-Ladung (1) gebildet sind, **dadurch gekennzeichnet, dass** das Verfahren einen Schritt (110) des Entfernens von Graten (2) durch Abscheren der Wand (12) des Zentralkanals (11) der Treibstoffladung (1) mit einem Abscherwerkzeug (32) umfasst, das an einem angelenkten Roboterarm (31) installiert ist, während:
- die Bewegungen des Roboterarms (31) durch eine Benutzerschnittstelle (33) gesteuert werden, die Steuermittel (33a) umfasst, die für die Verwendung durch einen Benutzer konfiguriert sind,
- ein Kraftsensor (34) die Kraft misst, die von dem Abscherwerkzeug (32) ausgeübt wird,
- eine Steuereinheit (35), die mit dem Kraftsensor (34) verbunden ist, die Bewegungen des Roboterarms (31) reguliert, indem sie die von dem Abscherwerkzeug (32) ausgeübte Kraft unter einer ersten vorbestimmten Kraftschwelle hält, wobei die Steuereinheit (35) auch die Bewegungen des Roboterarms (31) reguliert, indem sie eine Bewegungsgeschwindigkeit des Abscherwerkzeugs (32) beibehält, die unter einem vorbestimmten Geschwindigkeitsschwellenwert liegt.

2. Verfahren nach Anspruch 1, wobei das Verfahren einen Schritt (100) des Abtastens umfasst, der vor dem Schritt (110) des Entfernens von Graten (2) erfolgt und während dessen:
- das Abscherwerkzeug (32) entlang der Wand (12) des Zentralkanals (11) der Treibstoffladung (1) durch den Roboterarm (31) verschoben wird,
- die Bewegungen des Roboterarms (31) durch die Benutzerschnittstelle (33) gesteuert werden;
- der Kraftsensor (34) die von dem Abscherwerkzeug (32) ausgeübte Kraft misst,
- die Steuereinheit (35) die Bewegungen des Roboterarms (31) reguliert, indem sie die von dem Abscherwerkzeug (32) ausgeübte Kraft unter einer zweiten vorbestimmten Kraftschwelle hält, die niedriger als die erste Kraftschwelle ist.

3. Verfahren nach einem der Ansprüche 1 bis 2, wobei die erste Kraftschwelle zwischen einem minimalen Wert und einem maximalen Wert variiert, die vorbestimmt sind.

4. Verfahren nach einem der Ansprüche 1 bis 3, wobei der Geschwindigkeitsschwellenwert zwischen einem minimalen Wert und einem maximalen Wert variiert, die vorbestimmt sind.

5. Verfahren nach Anspruch 3, wobei der Schritt (110) des Entfernens von Graten (2) die folgenden Teilschritte umfasst:
- (111): Platzieren des Abscherkwerkzeugs (32) gegen einen Grat (2),
- (112): Drücken des Abscherwerkzeugs (32) gegen den Grat (2), wobei die von dem Abscherwerkzeug (32) gegen den Grat (2) ausgeübte Kraft progressiv erhöht wird und die erste Kraftschwelle progressiv erhöht wird, bis der Grat (2) sich ablöst.

6. Verfahren nach einem der Ansprüche 1 bis 5, wobei die Steuereinheit (35) die Bewegungen des Roboterarms (31) reguliert, indem sie die kinetische Energie des Roboterarms (31) unter einem vorbestimmten Schwellenwert für die kinetische Energie hält.

7. Vorrichtung (3) zum Entfernen von Graten (2), die auf einer Wand (12) eines Zentralkanals (11) einer Treibstoffladung (1) gebildet sind, umfassend:
- einen angelenkten Roboterarm (31), der ein Ende (31a) umfasst, das dazu ausgestaltet ist, in das Innere des Zentralkanals (11) der Treibstoffladung (1) einzudringen,
- ein Abscherwerkzeug (32), das dazu ausgestaltet ist, an dem Ende (31a) des Roboterarms (31) befestigt zu werden,
- einen Kraftsensor (34), der dazu ausgestaltet ist, an dem Ende des Roboterarms (31) befestigt zu werden und der dazu ausgestaltet ist, die von dem Roboterarm (31) ausgeübte Kraft zu messen,
- eine Benutzerschnittstelle (33), die Steuermittel (33a) umfasst, die dazu ausgestaltet sind, die Steuerung der Bewegungen des Roboterarms (31) durch einen Benutzer zu ermöglichen,
- eine Steuereinheit (35), die mit dem Roboterarm (31) und dem Kraftsensor (34) verbunden ist, wobei die Steuereinheit (35) dazu ausgestaltet ist, die Bewegungen des Roboterarms (31) zu regulieren, indem sie die von dem Roboterarm (31) ausgeübte Kraft unter einer ersten vorbestimmten Kraftschwelle hält, wobei die Steuereinheit (35) ferner dazu ausgestaltet ist, die Bewegungen des Roboterarms (31) zu regulieren, indem sie eine Geschwindigkeit der Bewegung des Endes (31a) des Roboterarms (31) beibehält, die unter einem vorbestimmten Geschwindigkeitsschwellenwert liegt.

8. Vorrichtung (3) nach Anspruch 7, wobei das Abscherwerkzeug (32) aus einem elektrisch leitenden Material besteht, das mit der elektrischen Erdung verbunden ist.

9. Vorrichtung (3) nach einem der Ansprüche 7 oder 8, wobei die Vorrichtung (3) zumindest einen Bildsensor umfasst, der dazu ausgestaltet ist, an dem Ende (31a) des Roboterarms (31) befestigt zu werden, und die Benutzerschnittstelle (33) einen Bildschirm (33b) umfasst, der dazu ausgestaltet ist, die durch den zumindest einen Bildsensor erfassten Bilder anzuzeigen.

10. Vorrichtung (3) nach Anspruch 9, wobei die Vorrichtung (3) ein Beleuchtungssystem umfasst, das dazu ausgestaltet ist, an dem Ende (31a) des Roboterarms (31) befestigt zu werden.

11. Vorrichtung (3) nach einem der Ansprüche 7 bis 10, wobei die Vorrichtung (3) eine Saugdüse umfasst, die dazu ausgestaltet ist, an dem Ende (31a) des Roboterarms (31) befestigt zu werden.

## Claims

1. A process for removing webs (2) formed on a wall (12) of a central channel (11) of a propellant charge (1), **characterized in that** the process comprises a step (110) of removing webs (2) by levelling the wall (12) of the central channel (11) of the propellant charge (1) with a levelling tool (32) installed on an articulated robot arm (31) during which:
- the movements of the robot arm (31) are controlled by a user interface (33) which comprises control means (33a) configured to be used by a user;
- a force sensor (34) measures the force applied by the levelling tool (32);
- a control unit (35) connected to the force sensor (34) regulates the movements of the robot arm (31) by maintaining the force applied by the levelling tool (32) below a first predetermined force threshold, the control unit (35) also regulating the movements of the robot arm (31) by maintaining a movement speed of the levelling tool (32) which is below a predetermined speed threshold value.

2. The process as claimed in claim 1, wherein the process comprises a probing step (100) performed before the step (110) of removing the webs (2) and during which:
- the levelling tool (32) is moved along the wall (12) of the central channel (11) of the propellant charge (1) by the robot arm (31);
- the movements of the robot arm (31) are controlled by the user interface (33);
- the force sensor (34) measures the force applied by the levelling tool (32);
- the control unit (35) regulates the movements of the robot arm (31) by maintaining the force applied by the levelling tool (32) below a second predetermined force threshold which is lower than the first force threshold.

3. The process as claimed in any one of claims 1 to 2, wherein the first force threshold varies between a minimum value and a maximum value which are predetermined.

4. The process as claimed in any one of claims 1 to 3, wherein the speed threshold value varies between a minimum value and a maximum value which are predetermined.

5. The process as claimed in claim 3, wherein the step (110) of removing webs (2) comprises the following substeps:
- (111): placing the levelling tool (32) against a web (2);
- (112): pressing the levelling tool (32) against the web (2) by progressively increasing the force applied by the levelling tool (32) against the web (2) and by progressively increasing the first force threshold until the web (2) is detached.

6. The process as claimed in any one of claims 1 to 5, wherein the control unit (35) regulates the movements of the robot arm (31) by keeping the kinetic energy of the robot arm (31) below a predetermined kinetic energy threshold value.

7. A device (3) for removing webs (2) formed on a wall (12) of a central channel (11) of a propellant charge (1) comprising:
- an articulated robot arm (31) comprising an end (31a) configured to penetrate into the central channel (11) of the propellant charge (1);
- a levelling tool (32) which is configured to be attached to the end (31a) of the robot arm (31)
- a force sensor (34) which is configured to be attached to the end of the robot arm (31) and which is configured to measure the force applied by the robot arm (31)
- a user interface (33) comprising control means (33a) which are configured to allow control of the movements of the robot arm (31) by a user;
- a control unit (35) which is connected to the robot arm (31) and to the force sensor (34), said control unit (35) being configured to regulate the movements of the robot arm (31) by maintaining the force applied by the robot arm (31) below a first predetermined force threshold, said control unit (35) being further configured to regulate the movements of the robot arm (31) by maintaining a movement speed of the end (31a) of the robot arm (31) which is below a predetermined speed threshold value.

8. The device (3) as claimed in claim 7, wherein the levelling tool (32) is made of an electrically conductive material and is connected to electrical ground.

9. The device (3) as claimed in any one of claims 7 or 8, wherein the device (3) comprises at least one image sensor which is configured to be attached to the end (31a) of the robot arm (31), and the user interface (33) comprises a display (33b) which is configured to display images acquired by said least one image sensor.

10. The device (3) as claimed in claim 9, wherein the device (3) comprises a lighting system which is configured to be attached to the end (31a) of the robot arm (31).

11. The device (3) as claimed in any one of claims 7 to 10, wherein the device (3) comprises a suction nozzle which is configured to be attached to the end (31a) of the robot arm (31).
